# DEMANDE DE BREVET EUROPEEN

(11) **EP 1 460 019 A1**
(43) Date de publication de la demande: **22.09.2004**
(21) Numéro de dépôt: 04290718.8
(22) Date de dépôt: 16.03.2004
(51) Int. Cl.: B66B 5/18

(54) **Dispositif de déblocage d'un parachute pour cabine d'ascenseur, ainsi que le parachute ainsi équipé**

(30) Priorité: 20.03.2003 FR 0303668
(71) Demandeur: Thyssenkrupp Elevator Manufacturing France S.A.S., 49007 Angers Cédex 01 (FR)
(72) Inventeur: Triboullier, François, 06220 Vallauris (FR); Levrard, Jean-Noel, 06140 Vence (FR)
(74) Mandataire: Maillet, Alain

(57) **Abrégé**

La présente invention concerne un dispositif de déblocage d'un parachute pour cabine d'ascenseur, ladite cabine se déplaçant dans une cage d'ascenseur guidée par des guides, ledit parachute comprenant un système de freinage et un système de contrebalancement du freinage prévus pour enserrer au moins un desdits guides de manière à coincer ladite cabine sur ledit ou lesdits guides en cas de prise de vitesse excessive.

Le dispositif selon l'invention se caractérise en ce qu'il comprend une platine incorporée audit système de contrebalancement du freinage, ladite platine étant constituée d'un coin et d'un contre-coin formant entre eux une rampe inclinée par rapport audit guide, ledit coin pouvant coulisser le long de la dite rampe R de manière à permettre audit contre-coin de s'écarter dudit guide après coincement de ladite cabine sur ledit guide par ledit parachute.

## Description

La présente invention concerne un dispositif de déblocage d'un parachute pour cabine d'ascenseur, ainsi que le parachute ainsi équipé.

De manière connue, une cabine d'ascenseur circule dans une cage d'ascenseur entraînée par un moteur et des câbles de traction et guidée le long de rails généralement appelés guides. Un contrepoids également tracté par les câbles de traction est parfois prévu pour équilibrer la charge formée par la cabine.

Ce déplacement de la cabine le long des guides est généralement contrôlé de manière à parer à de dangereux excès de vitesse de la cabine, par des moyens de freinage de la cabine. Ces moyens sont habituellement appelés « parachutes ». La législation en matière de sécurité relative aux ascenseurs imposant un arrêt de la cabine pour une vitesse excessive aussi bien dans le sens de la montée que dans le sens de la descente, la plupart des parachutes actuels disposent de moyens permettant le freinage de la cabine dans ces deux sens. De manière classique, le parachute agit sur le guide par coincement.

Ainsi, parmi les parachutes existants, on connaît des systèmes composés de coins. C'est par exemple le cas du document de brevet US-A-5 964 320 qui décrit le freinage d'une cabine d'ascenseur munie d'un système de coins fixes et de coins mobiles. Dans ce système, le freinage est obtenu par coulissement des coins mobiles le long de rampes formées par les coins fixes jusqu'à aboutir au coincement des coins mobiles entre les coins fixes. A l'aide de ce système de coins, on obtient un freinage, puis un blocage de la cabine d'ascenseur sur ses guides.

Il existe également des parachutes faisant intervenir un galet de coincement. Le principe de ce type de parachute est que le galet est prévu pour coulisser le long d'une rampe R inclinée en direction du guide. Ainsi, lorsque le parachute est enclenché, le galet s'insère progressivement entre la rampe R et le guide afin de réaliser progressivement le freinage, puis le blocage de la cabine. Un patin fixe situé de l'autre côté du guide est prévu pour contrebalancer la poussée engendrée par le galet. Ce type de parachute est par exemple illustré dans le document FR-A-2 689 113.

Une fois la cabine d'ascenseur bloquée sur le guide, la remise en route de l'ascenseur implique la libération de la cabine. Or, cette libération n'est pas aisée du fait des forces importantes exercées par le parachute sur le guide.

Dans la pratique, le déblocage consiste à soulever la cabine afin de forcer sur le système de parachute de manière à extraire les parties liées au châssis de la cabine des parties liées au système de parachute. Cette technique n'est pas véritablement une solution et les difficultés liées au déblocage persistent.

Certains dispositifs de freinage proposent des solutions facilitant leur déblocage. C'est par exemple le cas du document WO-A-00 01 604 qui décrit un système de freinage comportant un coin haut et un coin bas coulissants entre le guide et un bloc fixe formant contre-coin. Le coin haut est prévu pour venir se coincer entre le guide et le contre-coin lors d'une prise de vitesse excessive de la cabine en montée, et le coin bas est prévu pour se coincer entre le guide et le contre-coin lors d'une prise de vitesse excessive de la cabine en descente. Le déblocage des coins est réalisé comme dans la pratique habituelle en soulevant la cabine, mais est en plus facilité par le déplacement simultané à celui des coins, de plaques placées entre chaque coin et le contre-coin. Le frottement entre le coin et le contre-coin étant réduit grâce à ces plaques, les forces à exercer pour soulever la cabine sont également réduites, mais la cabine doit néanmoins être soulevée, ce qui reste une solution difficile à mettre en oeuvre.

Le but de l'invention est donc de proposer un dispositif de déblocage d'une cabine d'ascenseur permettant de libérer la cabine d'ascenseur sans avoir à la soulever.

A cet effet, la présente invention concerne un dispositif de déblocage d'un parachute pour cabine d'ascenseur, ladite cabine se déplaçant dans une cage d'ascenseur guidée par des guides, ledit parachute comprenant un système de freinage et un système de contrebalancement du freinage prévus pour enserrer au moins un desdits guides de manière à coincer ladite cabine sur ledit ou lesdits guides en cas de prise de vitesse excessive. Le dispositif selon l'invention se caractérise en ce qu'il comprend une platine incorporée audit système de contrebalancement du freinage, ladite platine étant constituée d'un coin et d'un contre-coin formant entre eux une rampe inclinée par rapport audit guide, ledit coin pouvant coulisser le long de la dite rampe de manière à permettre audit contre-coin de s'écarter dudit guide après coincement de ladite cabine sur ledit guide par ledit parachute.

Selon une autre caractéristique de l'invention, ledit dispositif comporte un moyen permettant d'empêcher ledit coin de coulisser le long de ladite rampe dans une direction proche de celle dudit guide.

Selon une autre caractéristique de l'invention, ledit moyen permettant d'empêcher ledit coin de coulisser le long de ladite rampe est une vis de positionnement formant butée.

Selon une autre caractéristique de l'invention, ledit coin comporte au moins un trou oblong prévu pour lui permettre de coulisser sans être désolidarisé dudit système de contrebalancement du freinage.

Selon une autre caractéristique de l'invention, ledit contre-coin est lié à un moyen élastique prévu pour écarter ledit contre-coin dudit guide après coulissement dudit coin.

Selon une autre caractéristique de l'invention, ladite ou chaque vis de positionnement comporte un témoin permettant de vérifier la mise en place effective de ladite vis de positionnement.

Selon une autre caractéristique de l'invention, ledit dispositif est accessible depuis l'intérieur de ladite cabine.

L'invention concerne également un parachute pour cabine d'ascenseur, ledit parachute se caractérisant en ce qu'il comporte de part et d'autre dudit guide un système de freinage et un système de contrebalancement du freinage, ledit système de freinage comportant un organe de freinage pourvu d'un patin de freinage haut et d'un patin de freinage bas et prévu pour pouvoir pivoter autour d'un axe perpendiculaire à l'axe longitudinal dudit guide de manière à amener lesdits patins en position de coincement sur ledit guide lorsque ladite cabine acquiert une vitesse de déplacement excessive, ledit système de contrebalancement du freinage comportant un patin monté sur un dispositif de déblocage tel que décrit précédemment.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente une vue d'ensemble d'une cabine d'ascenseur montée sur des guides et munie d'un parachute pourvu du dispositif de déblocage selon l'invention ;
La Fig. 2 représente une vue éclatée d'un guide et d'un parachute pourvu du dispositif de déblocage selon l'invention ;
La Fig. 3 représente une vue en position de repos d'un parachute pourvu du dispositif de déblocage selon l'invention ;
La Fig. 4 représente une vue en position de blocage en descente d'un parachute pourvu du dispositif de déblocage selon l'invention ; et

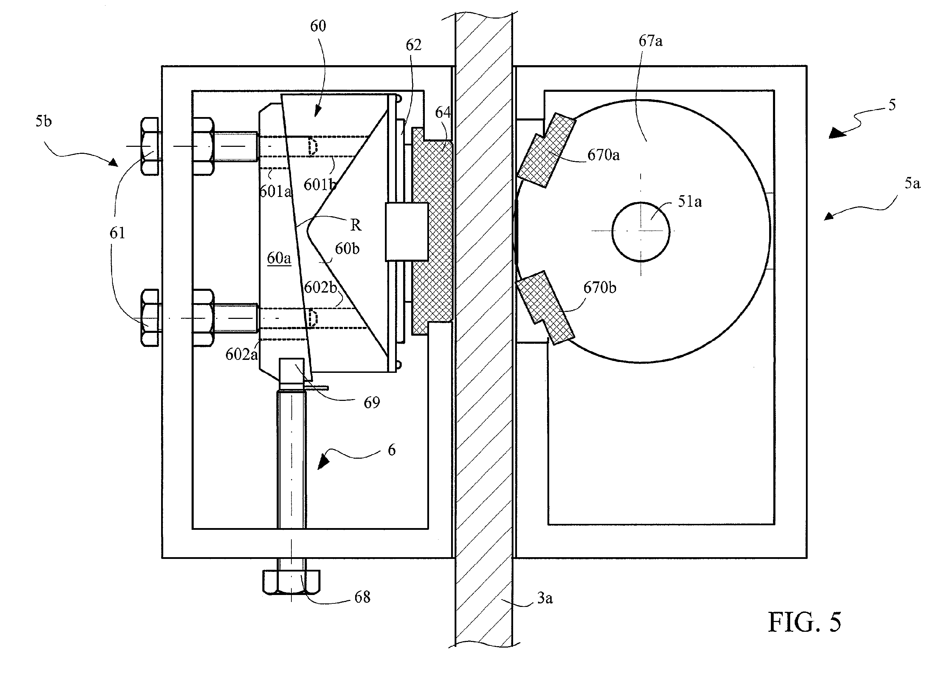

La Fig. 5 représente une vue en position débloquée d'un parachute pourvu du dispositif de déblocage selon l'invention.

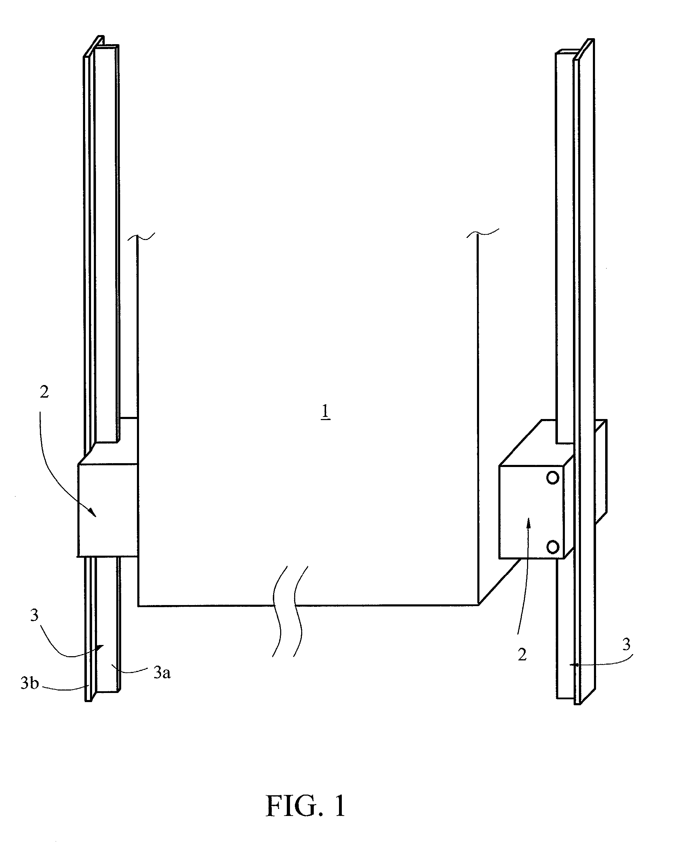

On a représenté à la Fig. 1 l'intérieur d'une cage d'ascenseur. Dans cette cage d'ascenseur, sont représentés une cabine d'ascenseur 1 tronquée longitudinalement et transversalement, deux guides 3 dont la section en « T » est formée d'une âme 3a permettant le guidage et de deux ailes 3b servant de support et deux parachutes 2 respectivement placés sur les parois des côtés du châssis (non représenté) de la cabine 1, entre ce châssis et un guide 3. Un parachute selon l'invention est avantageusement accessible depuis l'intérieur de la cabine au travers d'une ouverture prévue à cet effet et close en fonctionnement normal de la cabine. On notera qu'un parachute selon l'invention peut également être placé sur le contrepoids, par exemple lorsque la cage d'ascenseur comporte une cave.

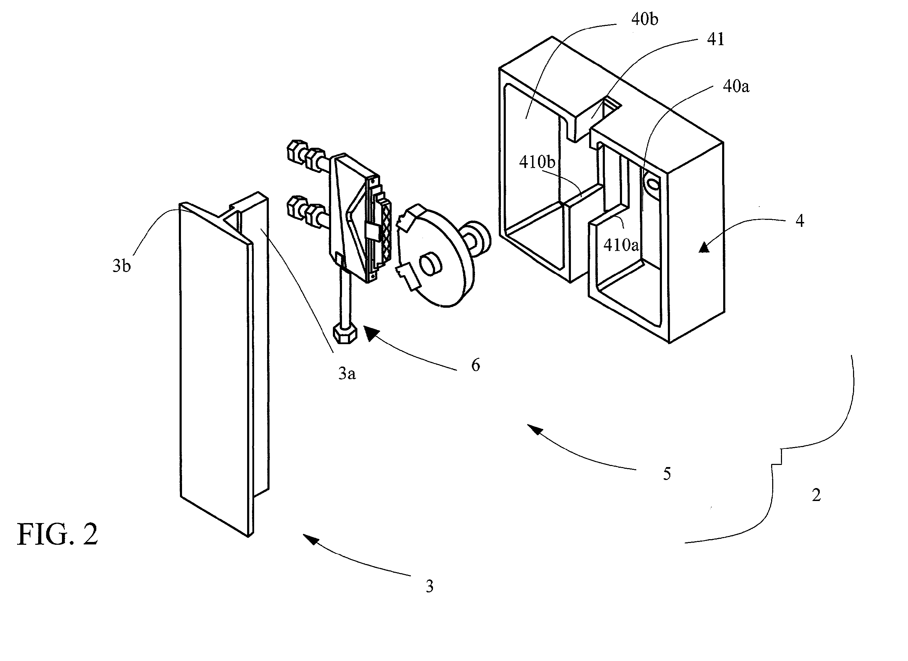

A la Fig. 2, sont représentés selon différents plans transversaux, un guide 3 ainsi que les différentes parties constitutives d'un parachute 2 selon la présente invention, qui sont un socle 4 et un système de parachute 5 pourvu d'un dispositif de déblocage 6 selon l'invention. Le socle 4 comprend deux parties 40a, 40b séparées entre elles par une rainure 41 le traversant verticalement de part en part. Cette rainure 41 est prévue pour permettre le passage de l'âme 3a du guide 3. En outre, les parois 410a et 410b des parties respectives 40a et 40b donnant sur la rainure 41 sont ouvertes de moitié de manière à permettre au système de parachute 5, qui est prévu pour être inséré dans chacune des parties 40a, 40b du socle 4, d'accéder au guide 3.

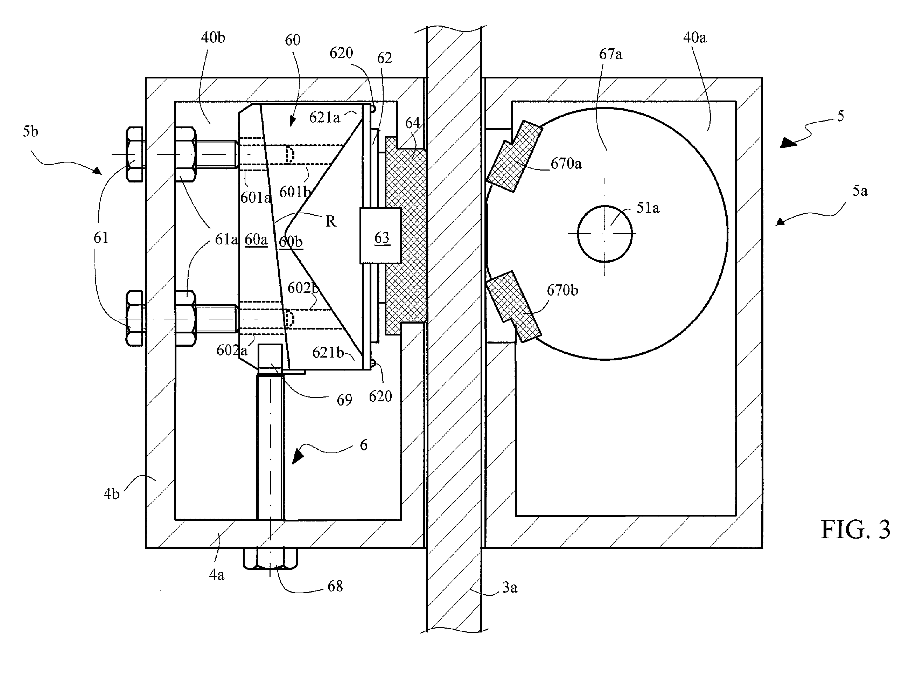

Ce système de parachute 5 est représenté à la Fig. 3 dans sa position de repos. Cette position de repos est celle qu'il adopte lors du déplacement de la cabine 1 à vitesse normale. Le système de parachute 5 comporte, installé dans la partie 40a du socle 4 à droite sur la Fig. 3, un système de freinage 5a, et dans la partie 40b du socle 4 à gauche, un système de contrebalancement du freinage 5b.

Le système de freinage 5a comprend un organe de freinage 67a prévu pour pouvoir pivoter autour d'un arbre 51a dont l'axe est situé dans un plan normal à l'axe longitudinal du guide 3 et parallèle à l'âme 3a et distant de celle-ci. L'organe 67a est pourvu à sa périphérie dans une zone proche du guide 3 symétriquement de part et d'autre d'un axe horizontal passant par son axe de pivotement d'un patin de freinage bas 670b et d'un patin de freinage haut 670a.

L'organe de freinage 67a est commandé par un système de déclenchement approprié, pour pouvoir pivoter autour de l'arbre 5 1a dans le sens trigonométrique ou dans le sens inverse selon que la cabine 1 acquière une vitesse excessive respectivement dans le sens de la montée ou dans le sens de la descente. Tout type de système de déclenchement peut être utilisé pour commander l'organe de freinage 67a.

Quant au système de contrebalancement du freinage 5b, il comporte une platine 60 constituée d'un bloc parallélépipèdique en deux parties 60a, 60b, la première partie 60a la plus éloignée du guide 3 présentant une forme de coin, la seconde partie 60b présentant une forme de contre-coin, les deux parties formant entre elles une rampe R inclinée selon un angle aigu par rapport à l'âme 3a dudit guide 3. Dans l'exemple représenté, l'angle formé entre la rampe R et le guide 3 est ouvert vers le haut, ce qui a pour effet de mettre la pointe du coin 60a également vers le haut.

Le contre-coin 60b comporte une face en « V » tournée vers le guide 3 qui ménage deux pointes d'appui 621a et 621 b. Sur ces pointes d'appui 621a et 62 1 b, est fixé, de préférence par des tétons 620, un moyen élastique de flexion 62, prenant ici la forme avantageuse de lames souples de taille décroissante avec l'éloignement de la platine 60. Les deux pointes 621a et 621b ménagent un espace à l'intérieur du V pour le débattement du moyen élastique 62.

Le moyen élastique 62 porte un patin 64 dans un matériau avantageusement à fort coefficient de frottement avec le guide 3 ou un matériau métallique dur. Le patin 64 et le moyen élastique 62 sont avantageusement liés l'un à l'autre par une plaque 63.

La platine 60 est emmanchée avec jeu à l'aide de trous oblongs 601a, 602a percés dans le coin 60a, d'une part, et de trous simples 601b, 602b percés dans le contre-coin 60b, d'autre part, sur les extrémités lisses de deux vis 61 vissées dans la paroi verticale gauche 4b du socle 4. Des contre-écrous 61a assurent le blocage des vis 61. La platine 60 est en butée contre les vis 61 qui assurent son positionnement vis-à-vis de l'âme 3a du guide 3. Le positionnement du coin 60a par rapport au contre-coin 60b est assuré par l'intermédiaire d'une vis de positionnement 68 vissée dans la paroi horizontale basse 4a du socle 4 qui, lors du fonctionnement normal de la cabine, empêche le coin 60a de coulisser le long de ladite rampe R. Cette vis 68 est pourvue d'un interrupteur de positionnement 69 en forme de plaque munie d'un contact dont la fonction est de signaler le dévissage de la vis 68. L'ensemble formé par les deux parties 60a et 60b de la platine 60, la vis 68, le moyen élastique 62 et l'interrupteur 69 forme le dispositif de déblocage du parachute 5 selon l'invention.

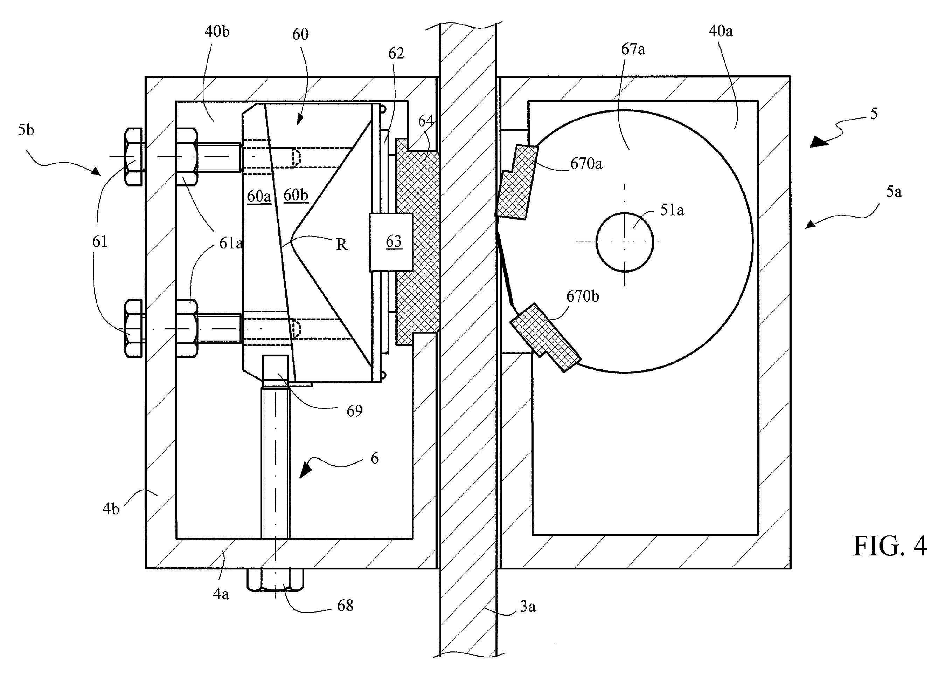

On a représenté à titre d'exemple le parachute en position de blocage en montée à la Fig. 4. On notera que la position de blocage ne joue pas de rôle au niveau du déblocage du parachute, et que la position de blocage en descente aurait aussi bien pu servir d'exemple.

En effet, si l'organe de freinage 67a pivote dans le sens inverse du sens trigonométrique, le patin bas 670b entre en appui forcé contre l'âme 3a du guide 3. Par contre, s'il pivote dans le sens trigonométrique, c'est le patin haut 670a qui entre en appui forcé contre l'âme 3a du guide 3. Dans l'un ou l'autre cas, l'âme 3a se trouve alors prise en tenaille entre, d'une part, un patin de freinage 670a, 670b de l'organe de freinage 67a et le patin de contrebalancement 64 situé de l'autre côté de l'âme 3a. Il en résulte un coincement de la cabine 1 qui s'arrête sur une distance proportionnelle à la raideur du ressort 62.

On notera que dans cette position de freinage, chaque patin 670a, 670b, de par sa forme et sa position sur l'organe de freinage 67a, a sa face en appui contre le guide 3 qui présente un angle aigu par rapport à l'axe longitudinal de ce guide et qu'ainsi, il est coincé, son mouvement n'étant pas en lui-même réversible.

La force de coincement des patins 670a et 670b sur le guide 3, lorsqu'ils sont en position de freinage, est donnée, par réaction, par le moyen élastique de flexion 62 via le patin 64. La vitesse de coincement est rendue réglable par le positionnement du moyen élastique 62 par rapport au guide 3 à l'aide des vis 61.

Une fois le système de parachute 5 coincé, le dispositif de déblocage 6 du parachute 5 est actionné en procédant de la manière suivante. La vis 68 est desserrée de quelques pas de façon à ce que le coin 60a puisse glisser le long de la rampe R jusqu'à venir reposer sur les extrémités lisses des vis 61. Grâce aux trous oblongs 601a, 602a percés dans ledit coin 60a, ledit coin 60a peut coulisser sans être désolidarisé dudit système de contrebalancement du freinage 5b. L'interrupteur 69 signale alors le dévissage de la vis 68 qui ne remplit plus sa fonction de butée. Le contre-coin 60b, sous l'effet du moyen élastique 62, coulisse alors sur les extrémités lisses des vis 61 et s'écarte de l'âme 3a du guide 3, libérant le patin 670a ou 670b qui se décoince. L'organe de freinage 67a est libéré de l'emprise exercée par le système de déclenchement, ce qui a pour effet de le ramener dans sa position de repos. Le coin 60a est replacé dans sa position de fonctionnement représentée à la Fig. 3, en même temps que la vis 68 est revissée. L'interrupteur 69 est le témoin du revissage de la vis 68. Il assure que le parachute est alors à nouveau prêt à fonctionner.

## Revendications

1. Dispositif de déblocage (6) d'un parachute (5) pour cabine d'ascenseur (1), ladite cabine (1) se déplaçant dans une cage d'ascenseur guidée par des guides (3), ledit parachute (5) comprenant un système de freinage (5a) et un système de contrebalancement du freinage (5b) prévus pour enserrer au moins un desdits guides de manière à coincer ladite cabine sur ledit ou lesdits guides en cas de prise de vitesse excessive, **caractérisé en ce qu'**il comprend une platine (60) incorporée audit système de contrebalancement du freinage (5b), ladite platine (60) étant constituée d'un coin (60a) et d'un contre-coin (60b) formant entre eux une rampe inclinée par rapport audit guide (3), ledit coin (60a) pouvant coulisser le long de la dite rampe R de manière à permettre audit contre-coin (60b) de s'écarter dudit guide (3) après coincement de ladite cabine (1) sur ledit guide (3) par ledit parachute (5).

2. Dispositif de déblocage d'une cabine d'ascenseur selon la revendication 1, **caractérisé en ce qu'**il comporte un moyen permettant d'empêcher ledit coin (60a) de coulisser le long de ladite rampe R dans une direction proche de celle dudit guide (3).

3. Dispositif de déblocage d'une cabine d'ascenseur selon la revendication 2, **caractérisé en ce que** ledit moyen permettant d'empêcher ledit coin (60a) de coulisser le long de ladite rampe R est une vis de positionnement (68) formant butée.

4. Dispositif de déblocage d'une cabine d'ascenseur selon l'une des revendications précédentes, **caractérisé en ce que** ledit coin (60a) comporte au moins un trou oblong prévu pour lui permettre de coulisser sans être désolidarisé dudit système de contrebalancement du freinage (5b).

5. Dispositif de déblocage d'une cabine d'ascenseur selon l'une des revendications précédentes, **caractérisé en ce que** ledit contre-coin est lié à un moyen élastique prévu pour écarter ledit contre-coin (60b) dudit guide (3) après coulissement dudit coin (60a).

6. Dispositif de déblocage d'une cabine d'ascenseur selon l'une des revendications 3 à 5, **caractérisé en ce que** ladite ou chaque vis de positionnement (68) comporte un témoin (69) permettant de vérifier la mise en place effective de ladite vis de positionnement (68).

7. Dispositif de déblocage d'une cabine d'ascenseur selon l'une des revendications précédentes, **caractérisé en ce qu'**il est monté sur ladite cabine de manière à être accessible depuis l'intérieur de ladite cabine (1).

8. Parachute (5) pour cabine d'ascenseur (1), **caractérisé en ce qu'**il comporte de part et d'autre dudit guide (3) un système de freinage (5a) et un système de contrebalancement du freinage (5b), ledit système de freinage (5a) comportant un organe de freinage (67a) pourvu d'un patin de freinage haut (670a) et d'un patin de freinage bas (670b), et prévu pour pouvoir pivoter autour d'un axe perpendiculaire à l'axe longitudinal dudit guide (3) de manière à amener lesdits patins (670a et 670b) en position de coincement sur ledit guide (3) lorsque ladite cabine (1) acquiert une vitesse de déplacement excessive, ledit système de contrebalancement du freinage (5b) comportant un patin (64) monté sur un dispositif de déblocage tel que revendiqué précédemment.
